# EUROPEAN PATENT APPLICATION

(11) **EP 1 767 503 A1**
(43) Date of publication of application: **28.03.2007**
(21) Application number: 05425664.9
(22) Date of filing: 22.09.2005
(51) Int. Cl.: C03C 11/00

(54) **Foamed glass granules for reinforcing structures in general, process for manufacturing said granules and structure reinforced with the same**

(71) Applicant: Saint-Gobain Revetex S.r.l., 20045 Besana Brianza (Milano) (IT)
(72) Inventor: Ferrante, Antonio, 20045 Besana Brianza (MI) (IT)
(74) Representative: Petruzziello, Aldo

(57) **Abstract**

A yarn-derived glass granule for reinforcing structures in general, consisting of granules with a rounded shape, wholly made of glass and formed by a porous nucleus and by an outer surface which forms a hard and compact shell is provided.
With respect to the known glass yarns, the yarn-derived glass granules according to the present invention have the advantage of having a lower density, with the result of allowing the manufacturing of a construction lighter than those obtained with the traditional technology with reinforcing glass yarns, even if the same mechanical resistance properties are maintained.

## Description

The present invention refers to foamed glass yarns particularly suitable for reinforcing structures in general. The invention also extends to the manufacturing process of these foamed glass yarns.

The glass yarns to which the present invention refers, particularly the yarns of E (or "Electric Glass") and AR (or "Alkaline Resistant") glass, are used as a reinforcing filler for plastic materials in general and for concretes, for mortars and the like, respectively, having the function of increasing the resistance and the other mechanical properties of the construction obtained with such materials.

However, the traditional glass yarns of E type, of AR type or of other type (glass yarns-aluminium silicate) have the drawback of having a quite high density, so as to negatively affect the whole weight of the end construction.

Furthermore, these glass yarns are substantially elongated or filiform in shape, not much compatible with the shapes of the other inert fillers existing in a mixture for concrete mix, with the consequence to be not much mixable unless with particular processes and to create application difficulties.

Therefore, there is the need of having disposal glass yarns lighter than the ones currently known and which can be amalgamated more easily with the inert fillers, so as to obtain constructions less heavy and having no application difficulties, the mechanical performances conferred thereto being equal.

Object of the present invention is therefore to provide glass yarns, and the relative manufacturing process, suitable to confer to the construction the same mechanical properties obtained with the traditional glass yarns but, with respect to the latter, which are lighter and which can be amalgamated more easily with the aggregate and the concretes.

These and other objects are achieved by the glass yarn and by the process according to claims 1 and 8, respectively. Preferred embodiments of the invention result from the remaining claims.

With respect to the known glass yarns, those according to the present invention have the advantage of having a lower density, with the result of allowing the manufacturing of constructions lighter than those obtained with the traditional technology with reinforcing glass yarns, even if they keep the same mechanical resistance properties.

Furthermore, the foamed glass yarns according to the invention have the advantage of having a shape compatible to the one of the inert fillers, which makes the concrete mixing easier and more effective.

These and other objects, features and advantages will result from the following description of a preferred embodiment of the process and of the glass yarn of the invention disclosed, by way of a not limitative example, in the figures of the enclosed drawing sheets.

Wherein:
- figure 1 illustrates an example of the traditional glass yarns with a filiform structure, used for preparing the glass yarn of the invention;
- figure 2 illustrates the glass yarn of figure 1, after a grinding treatment;
- figure 3 illustrates the foamed glass yarn of the invention, obtained from the yarn of figure 2;
- figure 4 illustrates a section of one of the granules forming the foamed glass yarn of figure 3; and
- figure 5 is a diagram of the invention process.

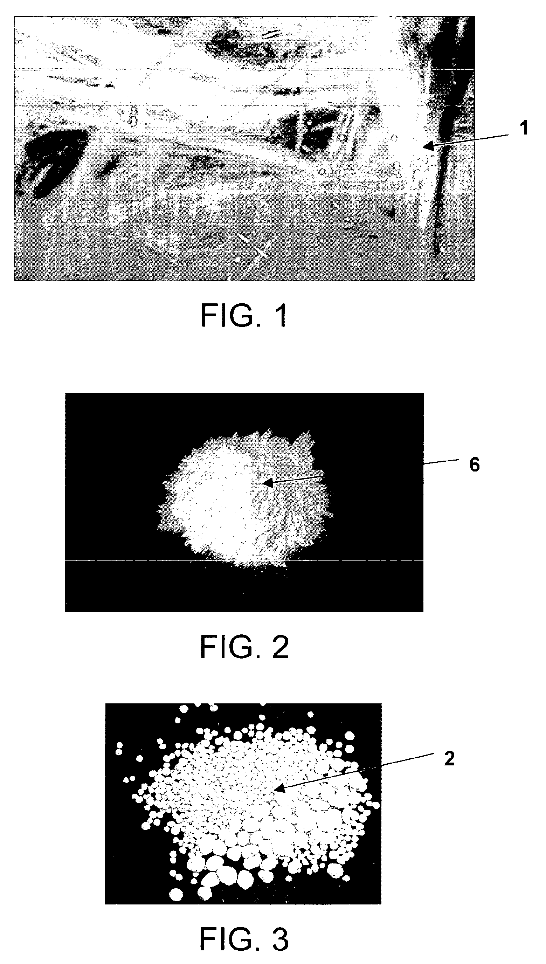

The glass yarn illustrated in figure 1, of the type belonging to the known art, has the shape of continuous glass filaments with diameters from 10 to 45 µ, preferably of an aluminium-silicate-based glass, in particular glasses of E or AR type suitable for the objects of the present invention. These yarns 1 are then ground, with a treatment which will be better described hereinafter, so as to obtain the glass powder 6 illustrated in figure 2 that, in turn, is transformed for producing the foamed glass yarn of the invention, illustrated in figure 3.

The latter, in particular, is constituted by glass yarns assuming the shape of granules 2 with a rounded shape, wholly made of glass and having a porous nucleus (3, 4) and an outer surface 5 forming a hard and compact shell.

The sizes and the specific weight of these granules are reported in the following table:

| Type | Granulometry (mm) | Specific weight (kg/dm³⁾ |
|---|---|---|
| 1 | 0.30-0.60 | 0.6 |
| 2 | 0.60-1.0 | 0.5 |
| 3 | 1.0-2.0 | 0.4 |
| 4 | 2.0-4.0 | 0.3 |
| 5 | 4.0-8.0 | 0.25 |
| 6 | 8.0-16.0 | 0.18 |

The crushing strength offered by these light aggregate with granular shapes varies from about 20 N/mm² for the type n.1 to about 8 N/mm² for the granules of the type n.6. Furthermore, the aggregate's softening point varies from 600 °C for the granules obtained from E glass yarns to 700 °C for those made of AR glass.

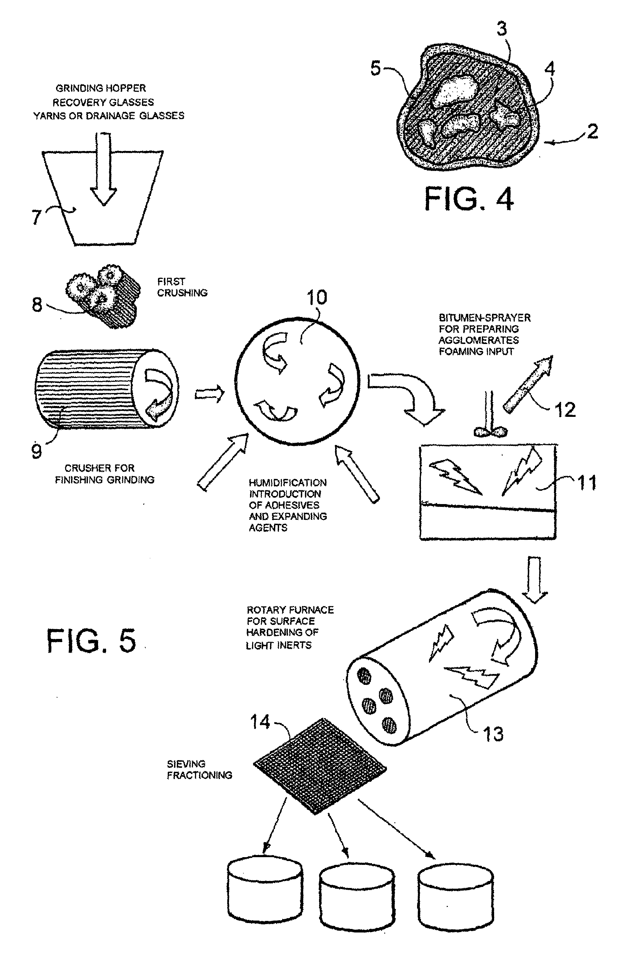

As shown in figure 4, these granules 2 show themselves as substantially spherical shells, having a compact outer surface 5 and wherein full parts 3 can be distinguished, formed by the ground glass yarn 6 after melting, as well as empty cavities 4.

Due to the complete vitrification of the outer surface 5 of the granule 2, the latter is perfectly impermeable to liquids such as water, acid solutions and basic solutions, so as it does not subject any degrading effect and it is not made heavier by infiltration, inside thereof, of these liquids.

The spherical structure of the granule, in turn, confers to the same a high crushing strength, by further making it compatible and assimilable with respect to the shapes of the remaining inert fillers. Lastly, the presence of the cavities 4 reduces the granule's weight, without jeopardizing the mechanical resistance properties thereof and, on the contrary, conferring to the same insulating properties, both thermal and acoustic, and non-slip properties. The same cavities carry out also a damping function against vibrations.

As it is better illustrated in figure 5 the glass yarn of figure 1, at first loaded into a hopper 7, is made to pass through an apparatus 8 for a coarse, humid-dry differentiated crushing. The crushed product is then treated in a finishing crusher 9, from which the powder 6 of the glass yarn of figure 2 is obtained.

In the following step, carried out in a mixer 10, the mixing-humidification of the glass yarn 6 with adhesives and expanding agents is performed. The mixing procedures are carried out by controlling the weight of the various components, in order to assure quality and constancy to the end product.

The product outgoing from the mixer 10 is characterised by granules of glass yarn, tending to the spherical shape, which are subsequently dehumidified inside a drier 11. Inside the drier a ventilation is also provided, the purpose thereof being to remove the particles 12 of ground glass yarn which have not part in the formation of the foamed glass granules. The sucked particles 12 are then recycled to the mixer 10.

The granules outgoing from the drier 11 are then sent to the furnace 13, preferably of the type with rotative pipes, from which the granules of foamed glass yarn 2 of figure 3 are obtained. Inside these pipes the glass yarns are subjected to a thermal treatment substantially comprising three steps, that are: a first step or pre-heating step of an initial, properly ground glass yarn; a second step, wherein the real melting of said initial glass yarn is carried out, with formation of said granules 2 and with a foaming reaction inside the vitreous mass of the granules; and a third step of controlled cooling and of tempering of the outer surface of the same granules 2.

In particular the glass foaming, with the consequent formation of the granule 2 of light aggregate, takes place at a temperature, designated as "glass liquid status", which is different depending on the type (E, AR or other) of the glass. At said temperature, the expanding agents (generally, sulphates, carbonates and oxides) gasify, leavening the vitreous mass of the granule 2 and determining the formation, inside thereof, of the described cavities 4.

The glass yarn, in the furnace 13, is subjected to an initial temperature of about 150 °C, which increases until an end temperature of 900-1200 °C, corresponding to the glass softening temperature and to the temperature for forming an outer hardened surface 5 of the foam small ball, is reached. The rotation and the inclination of the furnace's pipes, in turn, apart from determining the product's stay time inside thereof, cause the granules' rolling, with the effect of stabilizing the spherical shape thereof. In the end part of these pipes the furnace's temperature is reduced to the solidification one of the glass yarn, thus obtaining the hardening of the surface 5 of the granules 2.

The so-obtained granules are then conveyed to the fractioning sieves 14, which allow the granulometry classes according to the sizes shown in the preceding table be separated.

With these granules, preferably made of aluminium-silicate-based glass, in particular of glasses of E and AR type, alone or even in mixture, it is possible to implement plaster's mortars which are light, easy to apply and auto-levelling, as well as bearing and non-bearing structures, with lightness properties too, the mechanical resistance being equal with respect to the known yarns. Furthermore, the foamed glass yarn of the invention is suitable to prepare thermo-acoustical insulating devices with small thickness, lightened structures made of plastic material and other lightened composite materials.

## Claims

1. Glass yarn for reinforcing structures in general, **characterized in that** it is a foamed glass yarn.

2. Glass yarn according to claim 1, **characterized in that** it consist of granules (2) with rounded shape, wholly made of glass and formed by a porous nucleus and by an outer surface (5) which forms a hard and compact shell.

3. Glass yarn according to claim 2, **characterized in that** said porous nucleus consist of full parts (3) and of empty cavities (4).

4. Glass yarn according to one of the preceding claims, **characterized in that** it is an aluminium-silicate-based glass, in particular glasses of "E" and "AR" type, alone or in mixture.

5. Glass yarn according to one of the preceding claims, **characterized in that** said granules (2) are of the type shown in the following table:
| Type | Granulometry (mm) | Specific weight (kg/dm³⁾ |
|---|---|---|
| 1 | 0.30-0.60 | 0.6 |
| 2 | 0.60-1.0 | 0.5 |
| 3 | 1.0-2.0 | 0.4 |
| 4 | 2.0-4.0 | 0.3 |
| 5 | 4.0-8.0 | 0.25 |
| 6 | 8.0-16.0 | 0.18 |

6. Glass yarn according to one of the preceding claims, **characterized in that** said granules (2) have a crushing strength from about 20 N/mm² to about 8 N/mm².

7. Glass yarn according to one of the preceding claims, **characterized in that** said granules (2) have a softening point which varies from about 600 °C, for the granules obtained from a E glass yarns, to about 700 °C for those obtained from a AR glass.

8. Process for manufacturing glass yarns according to at least one of claims 1 to 7, **characterized in that** it provides the formation of said granules (2) with a rounded shape, wholly made of glass and formed by a porous nucleus (3, 4) and by an outer surface (5) which forms a hard and compact shell.

9. Process according to claim 8, **characterized in that** it provides the foaming of the vitreous mass which forms said porous nucleus (3, 4).

10. Process according to claim 8, **characterized in that** said formation of the granules (2) provides a first step or pre-heating step of an initial, properly ground glass yarn; a second step, wherein the real melting of said glass yarn is performed, with formation of the granules (2) mentioned above and with a foaming reaction inside the vitreous mass of the latter; and a third step of controlled cooling and of tempering of the outer surface of the granules.

11. Process according to claim 8, **characterized in that** it provides:
- the grinding and the crushing of the initial glass yarn, until a powder (6) of glass yarn is obtained;
- the mixing of said powder (6) of glass yarn with expanding agents;
- the dehumidification of the mixed product, which comes from the preceding processing;
- the heating of the dehumidified product until the glass foaming temperature, that is until the gasifying temperature of said expanding agents;
- the fractioned sieving of the granules of foamed glass yarn obtained in the preceding step.

12. Process according to claim 10, **characterized in that** the glass yarn, in said second step, is subjected to an initial heating of about 150 °C, which increases until a final temperature of 900-1200 °C, the latter corresponding to the glass softening temperature and to the temperature for forming an outer hardened surface of the foam granule.

13. Process according to claim 10, **characterized in that**, in said second step, the granules of foamed material are subjected to a rolling on themselves, with the effect of stabilizing the spherical shape thereof.

14. Process according to claim 11, **characterized in that** it further provides, during said dehumidification of the mixed product, the separation and the recycling of the particles of ground glass yarn, which have not part in the formation of the foamed glass granules.

15. Mortars for plaster and bearing and non-bearing structures, made of the foamed glass yarn according to at least one of the preceding claims.

16. Thermo-acoustic insulating agents, structures of plastic material and of lightened composite materials in general, obtained with the foamed glass yarn according to at least one of the preceding claims.
